# EUROPEAN PATENT SPECIFICATION

(11) **EP 1 484 755 B1**
(45) Date of publication and mention of the grant of the patent: **21.01.2009**
(21) Application number: 04252569.1
(22) Date of filing: 30.04.2004
(51) Int. Cl.: G11B 7/0065

(54) **Servo control method for holographic data storage and apparatus using the same**
Servo-Steuerungsverfahren für einen holografischen Datenspeicher und Apparat der dieses Verfahren verwendet
Procédé de servocommande pour un système de stockage holographique de données et appareil utilisant celui-ci

(30) Priority: 03.05.2003 KR 2003028459
(43) Date of publication of application: 08.12.2004
(73) Proprietor: SAMSUNG ELECTRONICS CO., LTD., Suwon-si, Gyeonggi-do (KR)
(72) Inventor: Song, Seok-ho, Songpa-gu, Seoul (KR); Kim, Sung-phil, Mafo-gu, Seoul (KR)
(74) Representative: Ertl, Nicholas Justin

(56) References cited:
- EP-A- 0 401 764
- US-A- 4 770 515
- US-A- 5 731 577
- US-A- 5 825 523
- US-A- 5 859 808
- US-A1- 2002 075 776
- US-B1- 6 233 083

## Description

### BACKGROUND OF THE INVENTION

The present invention relates to a servo control method for a holographic data storage and an apparatus for holographic data storage using the same.

As an information industry and a computer science industry have been rapidly developed, devices for information storage and input/output have been required to have a high capacity and high speed. Accordingly, increasing attentions have been paid to information storages which utilize holograms. Holographic data storage apparatuses have high density data storage, which means it can store massive pages of information in a single space using a volume hologram theory in the data recording and reproduction. In addition, since these apparatuses use a parallel data processing method as an input/output method, a data input/output speed is enhanced and an access time is reduced without requiring a mechanical driving unit.

Among the various applications of holographic data storage system, a disk type holographic data storage such as a CD-ROM or a DVD-ROM, which has free insertion and extraction characteristics, sometimes has a deviation of hologram data from original pixel location of a detector due to several error factors when the disk spins for the reproduction of stored data. A servo control method is conducted to precisely place the data pixel to the pixel location of the detector. To this end, an acoustic-optic modulator (AOM) or a galvano-mirror has been used in a light pick-up device to adjust the incidence angle of the reference beam.

In the above described servo control method, however, the light pick-up device may not be modulated in a small size. Moreover, expensive devices tend to be used for the light pick-up device, which is hard to practice.

US-A- 5 859 808, which is used for the two-part form delimitation discloses a holographic memory cell which uses a lens system which uses moving or tilting mirrors to guide a reference beam towards the storage layer.

### SUMMARY OF THE INVENTION

Accordingly, the present invention is provided to substantially obviate one or more problems due to limitations and disadvantages of the related art.

According to the present invention, there is provided a servo control method for a holographic data storage apparatus that records a data in a holographic data storage medium using an interference pattern of a signal beam and a reference beam and reads the data recorded in the holographic data storage medium using the reference beam, comprising placing a flat glass having a predetermined thickness between two lenses of a 4-f lens system, the 4-f lens system being positioned on an optical axis of the reference beam that passes through the 4-f lens system and the flat glass; and adjusting an angle of inclination of the flat glass with respect to the optical axis thereby to maintain a position of the reference beam.

The flat glass is preferably placed in a confocal position of the two lenses. The angle of inclination of the flat glass with respect to the optical axis is adjusted to control an incidence angle of the reference beam irradiated onto the holographic data storage medium under the condition that a position of the reference beam is maintained, thereby reading the data recorded in the holographic data storage medium. The holographic data storage medium may have a shape of a disk.

The invention also provides a holographic data storage apparatus that records a data in a holographic data storage medium using an interference pattern of a signal beam and a reference beam, comprising: a flat glass having a predetermined thickness, the flat glass being interposed between two lenses of a 4-f lens system on an optical axis of the reference beam that passes through the 4-f lens system and the flat glass; and a servo control unit adjusting an angle of inclination of the flat glass with respect to the optical axis of the reference beam to control an incidence angle of the reference beam irradiated onto the holographic data storage medium under the condition that a position of the reference beam is maintained.

The flat glass is preferably placed in a confocal position of the two lenses of the 4-f lens system. The holographic data storage medium may have a shape of a disk.

The invention thus provides a servo control method for a holographic data storage, which, especially in a disk type holographic data storage system such as CD-ROM and DVD-ROM using removable storage medium, reads a data pixel with accuracy during the reproduction of the stored hologram. The invention also provides a holographic data storage apparatus using the same.

The invention also provides a method of multiplexing record and reproduction of a holographic data storage apparatus that records a data in a holographic data storage medium using an interference pattern of a signal beam and a reference beam, comprising: placing a flat glass on a path of the reference beam; and adjusting an angle of inclination of the flat glass with respect to an optical axis of the reference beam to control an incidence angle of the reference beam irradiated onto the holographic data storage medium under the condition that a position of the reference beam is maintained.

The flat glass is preferably placed in a confocal position of two lenses of a 4-f lens system on the optical axis of the reference beam that passes through the 4-f lens system. The holographic data storage medium may have a shape of a disk.

### BRIEF DESCRIPTION OF THE DRAWINGS

The above aspects and features of the present invention will be more apparent by describing certain embodiments of the present invention with reference to the accompanying drawings, in which:
FIG. 1 is a schematic perspective view illustrating a principle that a hologram having a disk shape stores and reproduces information;
FIG. 2 is a schematic cross-sectional view illustrating a servo control method in a holographic data storage apparatus according to an exemplary embodiment of the present invention; and
FIG. 3 is a plan view illustrating a data image displayed in a spatial light modulator to be recorded in a holographic data storage apparatus according to an exemplary embodiment the present invention.

### DETAILED DESCRIPTION OF THE PREFERRED EMBODIMENTS

Certain embodiments of the present invention will be described in greater detail with reference to the accompanying drawings.

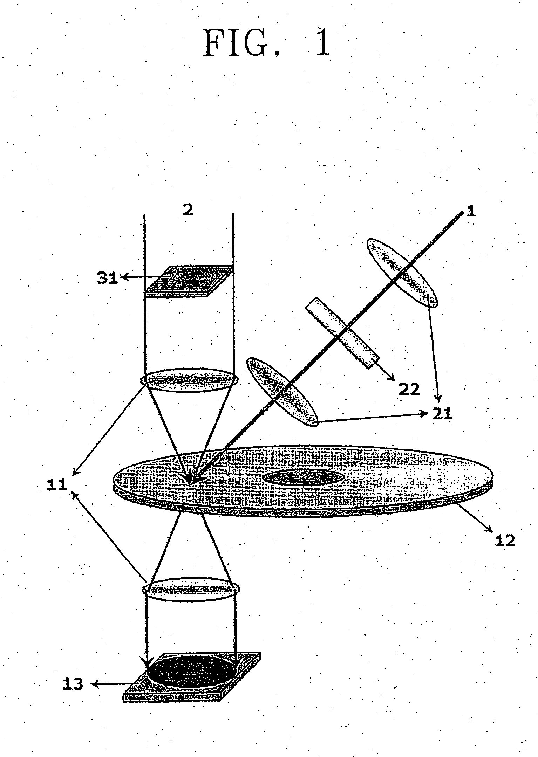

FIG. 1 is a schematic perspective view illustrating a principle that a hologram having a disk shape stores and reproduces a data. Referring to FIG. 1, during the record of a holographic data, a signal beam 2 passes through a spatial light modulator (SLM) 31 having a data image to record. The signal beam 2 is then Fourier transformed by a first 4-f relay lens system 11. A reference beam 1 is interfered with the signal beam 2 by a second 4-f relay lens system 21 to store a data. During the reproduction of the holographic data, only the reference beam 1 is used to read the stored data by the detector array 13 under the condition that the signal beam 2 is blocked. When the reproduced data image is detected outside pixels of the detector array 13 by errors, the angle of inclination of a flat glass 22 is adjusted to correct the position of the reproduced data image prior to irradiating the reference beam 1 onto a disk type holographic data storage medium 12 The flat glass 22 is interposed between two lenses of the second 4-f relay lens system 21 along the optical axis of the reference beam 1. The longitudinal direction of the flat glass 22 is perpendicular to the optical axis of the reference beam 1.

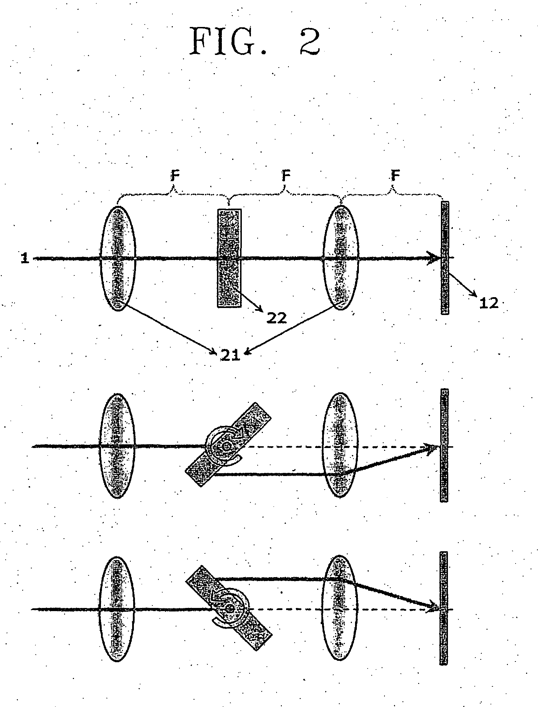

FIG. 2 is a schematic cross-sectional view illustrating a servo control method in a holographic data storage apparatus according to an exemplary embodiment of the present invention. Referring to FIGS. 1 to 2, the flat glass 22 having a thickness of d and a refractive index of n is interposed between two lenses of the second 4-f relay lens system 21. The flat glass 22 is inclined from the optical axis of the reference beam 1. When the reference beam 1 is irradiated onto the disk type holographic data storage medium 12; the angle of inclination of the reference beam 1 is adjusted under the condition that the position of the reference beam 1 is maintained. Thus, the detector array 13 may read the data in a precise position.

When the holographic data storage medium 12 is rotated, the position and angle of the stored data is changed by several errors. Thus, as the holographic data storage medium 12 moves, the incidence angle of the reference beam 1 toward the surface of the holographic data storage medium 12 should be changed in order to maintain the position of the holographic data reproduced. When parallel light is used as the reference beam 1, the position of the reproduced holographic data is changed according to the angle changes regardless of the horizontal position of the light irradiated onto the holographic data storage medium 12 with respect to the optical axis. When the incident light is deviated from the position at the time of record due to the rocking of the holographic data storage medium 12 during the reproduction of the holographic data, the flat glass 22 placed in the confocal position of the two lenses of the second 4-f relay lens system 21 is inclined from the optical axis of the reference beam 1. Only the incidence angle is adjusted while the incidence position of the reference beam 1 on the holographic data storage medium 12 is fixed. Hence, the reproduced data image may be detected in the original position. If the servo control method is not used during the rotation of the holographic data storage medium 12 such as a disk having a compact disk shape, a data pixel irradiated onto the detector array 13 such as a charge-coupled device may be deviated from the original position. This causes failures of reading a bit shaped data. According to the servo control method of the present invention, the flat glass 22 may be inclined from the optical axis of the reference beam 1 by a suitable angle to place the deviated data pixel into a correct position. The thickness, size and material of the flat glass 22 may vary in accordance with a size of the system used, desired resolution, manufacturing cost, etc. A transparent plastic material may be used as the flat glass.

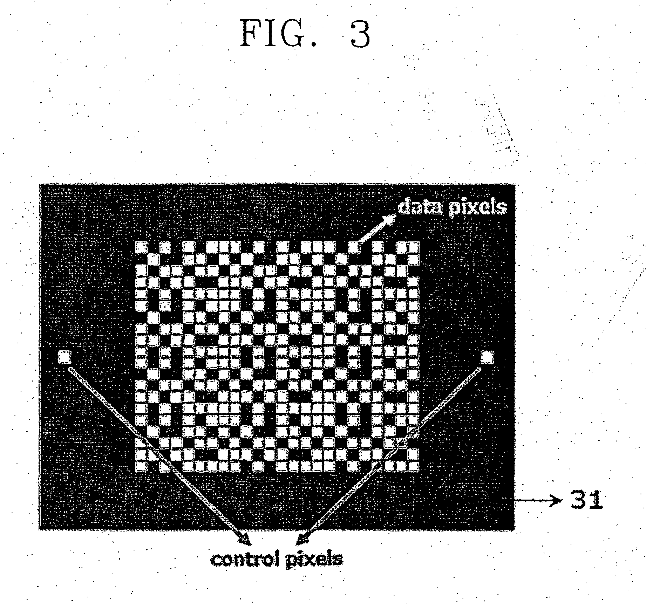

FIG. 3 is a plan view illustrating a data image displayed in a spatial light modulator to be recorded in a holographic data storage apparatus according to an exemplary embodiment the present invention. As shown in FIG. 3, a two-dimensional data including a data pixel and a control pixel is displayed in the spatial light modulator 31. Fourier transformed holographic data is recorded in the holographic data storage medium 12 having a shape of disk. The data pixel includes the data for storage, and the control pixel acts as a servo control unit. While reproducing the holographic data, the position of the control pixel is analyzed and the angle of inclination of the reference beam 1 is adjusted so that the data pixel is placed in the pixels of the detector array 13.

As described above, the angle of the reference beam is adjusted to increase the storage density during the servo control of the holographic data storage apparatus to read the data precisely according to the present invention. As a result, the position of the holographic data deviated from the original position by errors may be corrected. Moreover, the light pick-up device may be downsized and the manufacturing cost may be reduced. The holographic data storage apparatus according to the present invention may be used in an optical pick-up device of a high capacity holographic data storage apparatus.

The foregoing embodiment and advantages are merely exemplary and are not to be construed as limiting the present invention. Also, the description of the embodiments of the present invention is intended to be illustrative, and not to limit the scope of the claims.

## Claims

1. A servo control method for a holographic data storage apparatus that records a data in a holographic data storage medium using an interference pattern of a signal beam (2) and a reference beam (1) and reads the data recorded in the holographic data storage medium (13) using the reference beam (1), comprising:
placing a flat glass (22) having a predetermined thickness between two lenses of a 4-f lens system (21), the 4-f lens system being positioned on an optical axis of the reference beam (1) that passes through the 4-f lens system (21) and the flat glass (22),
**characterized in that** the method comprises adjusting an angle of inclination of the flat glass (22) with respect to the optical axis thereby to maintain a position of the reference beam (1).

2. The method as claimed in claim 1, wherein the flat glass (22) is placed in a confocal position of the two lenses, and wherein the angle of inclination of the flat glass (22) with respect to the optical axis is adjusted to control an incidence angle of the reference beam (1) irradiated onto the holographic data storage medium (13) under the condition that a position of the reference beam (1) is maintained, thereby reading the data recorded in the holographic data storage medium (13).

3. The method as claimed in claim 1 or 2, wherein the holographic data storage medium (13) has a shape of a disk.

4. A holographic data storage apparatus that records a data in a holographic data storage medium (13) using an interference pattern of a signal beam (2) and a reference beam (1), comprising:
a flat glass (22) having a predetermined thickness, the flat glass being interposed between two lenses of a 4-f lens system (21) on an optical axis of the reference beam (1) that passes through the 4-f lens system and the flat glass,
**characterized in that** the apparatus further comprises a servo control unit adjusting an angle of inclination of the flat glass (22) with respect to the optical axis of the reference beam to control an incidence angle of the reference beam (1) irradiated onto the holographic data storage medium under the condition that a position of the reference beam is maintained.

5. The apparatus as claimed in claim 4, wherein the flat glass (22) is placed in a confocal position of the two lenses of the 4-f lens system (21).

6. The apparatus as claimed in claim 4 or 5, wherein the holographic data storage medium (13) has a shape of a disk.

7. A method of multiplexing record and reproduction of a holographic data storage apparatus that records a data in a holographic data storage medium (13) using an interference pattern of a signal beam (2) and a reference beam (1), comprising placing a flat glass (22) on a path of the reference beam (1), **characterized in that** the method further comprises:
adjusting an angle of inclination of the flat glass (22) with respect to an optical axis of the reference beam (1) to control an incidence angle of the reference beam (1) irradiated onto the holographic data storage medium (13) under the condition that a position of the reference beam (1) is maintained.

8. The method as claimed in claim 7, wherein the flat glass (22) is placed in a confocal position of two lenses of a 4-f lens system (21) on the optical axis of the reference beam (1) that passes through the 4-f lens system.

9. The method as claimed in claim 7 or 8, wherein the holographic data storage medium (13) has a shape of a disk.

## Patentansprüche

1. Servosteuerverfahren für eine holografische Datenspeichervorrichtung, die Daten in einem holografischen Datenspeichermedium mittels eines Interferenzmusters aus einem Signalstrahl (2) und einem Referenzstrahl (1) aufzeichnet und die in dem holografischen Datenspeichermedium (13) aufgezeichneten Daten mittels des Referenzstrahls (1) liest, das die folgenden Schritte beinhaltet:
Platzieren einer flachen Glasplatte (22) mit einer vorbestimmten Dicke zwischen zwei Linsen eines 4-f Linsensystems (21), wobei das 4-f Linsensystem auf einer optischen Achse des Referenzstrahls (1) positioniert ist, der durch das 4-f Linsensystem (21) und die flache Glasplatte (22) passiert,
**dadurch gekennzeichnet, dass** das Verfahren das Justieren eines Neigungswinkels der flachen Glasplatte (22) mit Bezug auf die optische Achse beinhaltet, um **dadurch** eine Position des Referenzstrahls (1) beizubehalten.

2. Verfahren nach Anspruch 1, wobei die flache Glasplatte (22) in einer konfokalen Position der beiden Linsen platziert wird und wobei der Neigungswinkel der flachen Glasplatte (22) mit Bezug auf die optische Achse so justiert wird, dass ein Einfallswinkel des auf das holografische Datenspeichermedium (13) gestrahlten Referenzstrahls (1) unter der Bedingung gesteuert wird, dass eine Position des Referenzstrahls (1) beibehalten wird, um **dadurch** die in dem holografischen Datenspeichermedium (13) aufgezeichneten Daten zu lesen.

3. Verfahren nach Anspruch 1 oder 2, wobei das holografische Datenspeichermedium (13) die Form einer Scheibe hat.

4. Holografische Datenspeichervorrichtung, die Daten in einem holografischen Datenspeichermedium (13) mittels eines Interferenzmusters aus einem Signalstrahl (2) und einem Referenzstrahl (1) aufzeichnet und die Folgendes umfasst:
eine flache Glasplatte (22) mit einer vorbestimmten Dicke, wobei die flache Glasplatte zwischen zwei Linsen eines 4-f Linsensystems (21) auf einer optischen Achse des Referenzstrahls (1) liegt, der durch das 4-f Linsensystem und die flache Glasplatte passiert,
**dadurch gekennzeichnet, dass** die Vorrichtung ferner eine Servosteuereinheit umfasst, die einen Neigungswinkel der flachen Glasplatte (22) mit Bezug auf die optische Achse des Referenzstrahls justiert, um einen Einfallswinkel des auf das holografische Datenspeichermedium gestrahlten Referenzstrahls (1) unter der Bedingung zu regeln, dass eine Position des Referenzstrahls beibehalten wird.

5. Vorrichtung nach Anspruch 4, wobei die flache Glasplatte (22) in einer konfokalen Position der beiden Linsen des 4-f Linsensystems (21) platziert wird.

6. Vorrichtung nach Anspruch 4 oder 5, wobei das holografische Datenspeichermedium (13) die Form einer Scheibe hat.

7. Verfahren zum Multiplexieren, Aufzeichnen und Wiedergeben einer holografischen Datenspeichervorrichtung, die Daten in einem holografischen Datenspeichermedium (13) mittels eines Interferenzmusters aus einem Signalstrahl (2) und einem Referenzstrahl (1) aufzeichent, das das Legen einer flachen Glasplatte (22) auf einen Pfad des Referenzstrahls (1) beinhaltet, **dadurch gekennzeichnet, dass** das Verfahren ferner das Justieren eines Neigungswinkels der flachen Glasplatte (22) mit Bezug auf eine optische Achse des Referenzstrahls (1) beinhaltet, um einen Einfallswinkel des auf das holografische Datenspeichermedium (13) gestrahlten Referenzstrahls (1) unter der Bedingung zu regeln, dass eine Position des Referenzstrahls (1) beibehalten wird.

8. Verfahren nach Anspruch 7, wobei die flache Glasplatte (22) in eine konfokale Position von zwei Linsen eines 4-f Linsensystems (21) auf der optischen Achse des Referenzstrahls (1) gelegt wird, der durch das 4-f Linsensystem passiert.

9. Verfahren nach Anspruch 7 oder 8, wobei das holografische Datenspeichermedium (13) die Form einer Scheibe hat.

## Revendications

1. Procédé de servocommande pour un appareil de stockage de données holographiques qui enregistre des données dans un support de stockage de données holographiques en utilisant un motif d'interférence d'un faisceau de signal (2) et un faisceau de référence (1) et lit les données enregistrées dans le support de stockage de données holographiques (13) en utilisant le faisceau de référence (1), comprenant :
la mise en place d'un verre plat (22) ayant une épaisseur prédéterminée entre deux lentilles d'un système de lentilles 4-f (21), le système de lentilles 4-f étant positionné sur un axe optique du faisceau de référence (1) qui traverse le système de lentilles 4-f (21) et le verre plat (22),
**caractérisé en ce que** le procédé comprend le réglage d'un angle d'inclinaison du verre plat (22) par rapport à l'axe optique, pour maintenir ainsi une position du faisceau de référence (1)

2. Procédé selon la revendication 1, dans lequel le verre plat (22) est placé dans une position confocale des deux lentilles, et dans lequel l'angle d'inclinaison du verre plat (22) par rapport à l'axe optique est réglé pour commander un angle d'incidence du faisceau de référence (1) projeté sur le support de stockage de données holographiques (13) à la condition qu'une position du faisceau de référence (1) soit maintenue, pour lire ainsi les données enregistrées dans le support de stockage de données holographiques (13).

3. Procédé selon la revendication 1 ou 2, dans lequel le support de stockage de données holographiques (13) a la forme d'un disque.

4. Appareil de stockage de données holographiques qui enregistre des données dans un support de stockage de données holographiques (13) en utilisant un motif d'interférence d'un faisceau de signal (2) et un faisceau de référence (1), comprenant :
un verre plat (22) ayant une épaisseur prédéterminée, le verre plat étant interposé entre deux lentilles d'un système de lentilles 4-f (21) sur un axe optique du faisceau de référence (1) qui traverse le système de lentilles 4-f et le verre plat,
**caractérisé en ce que** l'appareil comprend en outre une unité de servocommande qui ajuste un angle d'inclinaison du verre plat (22) par rapport à l'axe optique du faisceau de référence pour commander un angle d'incidence du faisceau de référence (1) projeté sur le support de stockage de données holographiques à la condition qu'une position du faisceau de référence soit maintenue.

5. Appareil selon la revendication 4, dans lequel le verre plat (22) est placé dans une position confocale des deux lentilles du système de lentilles 4-f (21).

6. Appareil selon la revendication 4 ou 5, dans lequel le support de stockage de données holographiques (13) a la forme d'un disque.

7. Procédé de multiplexage, enregistrement et reproduction d'un appareil de stockage de données holographiques qui enregistre des données dans un support de stockage de données holographiques (13) en utilisant un motif d'interférence d'un faisceau de signal (2) et un faisceau de référence (1), comprenant la mise en place d'un verre plat (22) sur un parcours du faisceau de référence (1), **caractérisé en ce que** le procédé comprend en outre :
le réglage d'un angle d'inclinaison du verre plat (22) par rapport à un axe optique du faisceau de référence (1) pour commander un angle d'incidence du faisceau de référence (1) projeté sur le support de stockage de données holographiques (13) à la condition qu'une position du faisceau de référence (1) soit maintenue.

8. Procédé selon la revendication 7, dans lequel le verre plat (22) est placé dans une position confocale de deux lentilles d'un système de lentilles 4-f (21) sur l'axe optique du faisceau de référence (1) qui traverse le système de lentilles 4-f.

9. Procédé selon la revendication 7 ou 8, dans lequel le support de stockage de données holographiques (13) a la forme d'un disque.
